Europäisches Patentamt

European Patent Office

Office européen des brevets

(19)

(11) Veröffentlichungsnummer: **0 129 505**
**B1**

(12) **EUROPÄISCHE PATENTSCHRIFT**

(45) Veröffentlichungstag der Patentschrift:
**11.03.87**

(21) Anmeldenummer: **84810208.3**

(22) Anmeldetag: **03.05.84**

(51) Int. Cl.⁴: **B 29 C 65/34**

(54) Steuervorrichtung zum Ausschalten des Heizstromes einer strombeheizten Kunststoff-Schweissmuffe.

(30) Priorität: **15.06.83 CH 3281/83**

(43) Veröffentlichungstag der Anmeldung:
**27.12.84 Patentblatt 84/52**

(45) Bekanntmachung des Hinweises auf die Patenterteilung:
**11.03.87 Patentblatt 87/11**

(84) Benannte Vertragsstaaten:
**AT BE CH DE FR GB IT LI LU NL SE**

(56) Entgegenhaltungen:
**EP - A - 0 093 821**
**CH - A - 437 755**
**DE - A - 2 848 382**
**DE - B - 1 704 318**
**DE - B - 2 759 238**

(73) Patentinhaber: **Geberit AG, Schachenstrasse 77, CH-8645 Jona (CH)**

(72) Erfinder: **Keller, Urs, Tulpenweg 13, CH-4153 Reinach (CH)**
Erfinder: **Keller, Hans, Inzlingerstrasse 274, CH-4125 Riehen (CH)**

(74) Vertreter: **White, William et al, PATENTANWALTS-BUREAU ISLER AG Postfach 6940 Walchestrasse 23, CH-8023 Zürich (CH)**

ACTORUM AG

## Beschreibung

Zum Steuern des Heizstromes einer strombeheizten Kunststoff-Schweissmuffe sind durch Zeitschalter gesteuerte Geräte bekannt. Diese Geräte haben den Nachteil, dass sie gross und teuer sind.

Die EP-A-0 093 821 die unter Artikel 54(3) EPÜ fällt, zeigt eine zum Ausschalten des Heizstromes einer strombeheizten Kunststoff-Schweissmuffe dienende Steuervorrichtung, wobei die Schweissmuffe Steckerstifte zum Einstecken in eine Kupplungssteckdose aufweist und wobei in einer der Stromleitungen ein nicht auf den Stromdurchgang, sondern auf die von aussen zugeführte Wärme ansprechender thermischer Ausschalter eingesetzt ist, so dass das Ausschalten durch die Temperatur der Schweissmuffe gesteuert ist.

Nach dieser Druckschrift kann man jede Muffe mit einer thermischen Sicherung ausrüsten, die die Stromleitung durch die Muffe nach einer bestimmten, von der Stromstärke abhängigen Zeit irreversibel unterbricht. Dies hat den unbestreitbaren Vorteil, dass man zum Schweissen keinerlei Hilfsmittel benötigt und dass vom Benützer keine Fehler in der Zeitvorgabe gemacht werden können. Der Nachteil besteht darin, dass die Herstellung der Muffen durch die eingebaute Sicherung verteuert wird.

Die vorliegende Erfindung betrifft nun ebenfalls eine Steuervorrichtung zum Ausschalten des Heizstromes einer strombeheizten Kunststoff-Schweissmuffe, die sich preiswert herstellen lässt und die so ausgebildet ist, dass Bedienungsfehler sozusagen nicht möglich sein sollten. Die erfindungsgemässe Steuervorrichtung ist dadurch gekennzeichnet, dass sie als auf die Schweissmuffe aufsteckbarer Zwischenstecker ausgebildet ist mit zwei Steckbuchsen zum Aufstecken auf die Stromanschlüsse der Schweissmuffe und je einem mit jeder Steckbuchse durch eine Verbindungsleitung verbundenen Steckerstift zum Einstecken in eine Kupplungssteckdose, wobei in eine der Verbindungsleitungen ein nicht auf den Stromdurchgang sondern auf die von aussen zugeführte Wärme ansprechender thermischer Ausschalter eingesetzt und derart im Zwischensteckergehäuse angeordnet ist, dass er mit der Fläche bündig ist oder über die Fläche vorsteht, die beim Aufstecken des Zwischensteckers auf die Schweissmuffe auf der Schweissmuffenaussenfläche aufzuliegen bestimmt ist, so dass das Ausschalten durch die Temperatur der Schweissmuffenaussenfläche gesteuert wird.

Nachfolgend wird anhand der beiliegenden Zeichnung ein Ausführungsbeispiel der Erfindung beschrieben. In der Zeichnung zeigt

die Figur 1 einen auf eine Schweissmuffe aufgesetzten Zwischenstecker, teilweise in Ansicht und teilweise im Schnitt, und

die Figur 2 eine perspektivische Darstellung des Zwischensteckers.

Die als ganzes mit 1 bezeichnete Schweissmuffe ist mit Heizdrahtwicklungen 2 versehen, die sich in der Nähe der zylindrischen Innenfläche befinden. Die beiden Enden der Wicklung sind je mit einem Steckerstift 3 bzw. 4 verbunden, die beide je von einer Kunststoffhülse 5 bzw. 6 umgeben sind. Zum Verschweissen einer derartigen Schweissmuffe verwendet man nun die erfindungsgemässe, als Zwischenstecker ausgebildete Steuervorrichtung. Sie weist ein mit 10 bezeichnetes Gehäuse auf, das, wie das bei Steckern üblich ist, ein- oder zweiteilig ausgebildet sein kann. Im Gehäuse sitzen zwei metallene Steckerbuchsen 11 und 12, die so ausgebildet und angeordnet sind, dass sie sich in die zugehörigen Hülsen 5 bzw. 6 einstecken lassen und in der eingesteckten Stellung einen guten Kontakt mit dem Steckerstift 3 bzw. 4 machen.

Der in der Zeichnung obere Teil 10a des Zwischensteckergehäuses hat die für Stecker übliche Sechseckform. In ihm sitzen die beiden Steckerstifte 13 und 14.

Der Steckerstift 14 ist über eine Verbindungsleitung 16 mit der Buchse 12 direkt verbunden, während der Steckerstift 13 mittels der aus zwei Abschnitten 15a und 15b gebildeten Verbindungsleitung 15 über den thermischen Schalter 17 mit der Buchse 11 verbunden ist. Ein thermischer Ausschalter ist ein Schalter der unterhalb einer vorgegebenen Temperatur $t_s$ einen Stromkreis geschlossen hält, ihn beim Erreichen der Temperatur $t_s$ unterbricht und ihn solange offen hält, wie die Temperatur höher ist als $t_s$. Für den vorliegenden Zwischenstecker wird nun ein thermischer Ausschalter verwendet, der nicht auf den Stromdurchgang, bzw. auf die dadurch allenfalls erzeugte Wärme sondern auf die von aussen zugeführte Wärme anspricht. Solche mit Kunststoffgehäuse versehene Schalter sind zum Beispiel unter der Bezeichnung Uchiya U.P.6 im Handel käuflich. Zweckmässigerweise soll es sich um einen thermischen Ausschalter mit verzögerter Wiedereinschaltfunktion handeln, d.h. einen Schalter, der dann, wenn die Temperatur unterhalb $t_s$ absinkt, den Stromkreis nicht sofort sondern erst mit einer gewissen Verzögerung wieder schliesst. Im Zwischenstecker 10 ist, wie man aus der Zeichnung ersehen kann, der thermische Schalter 17 so angeordnet, dass er etwas über die Fläche 10b des Zwischensteckers 10, mit welcher er auf der zu verschweissenden Schweisshülse 1 aufliegt, vorsteht, falls die Schweisshülse mit einer entsprechenden Rille oder Vertiefung versehen ist. Falls die Schweisshülse jedoch keine Rille oder Vertiefung für die Fühlerfläche des Schalters 17 hat, so soll diese Fühlerfläche des Schalters mit der Fläche 10b bündig sein. Im dargestellten Ausführungsbeispiel ist jede der beiden Leitungen 15b und 16 mit je einer Elektrode der Anzeigeglimmlampe 18 verbunden.

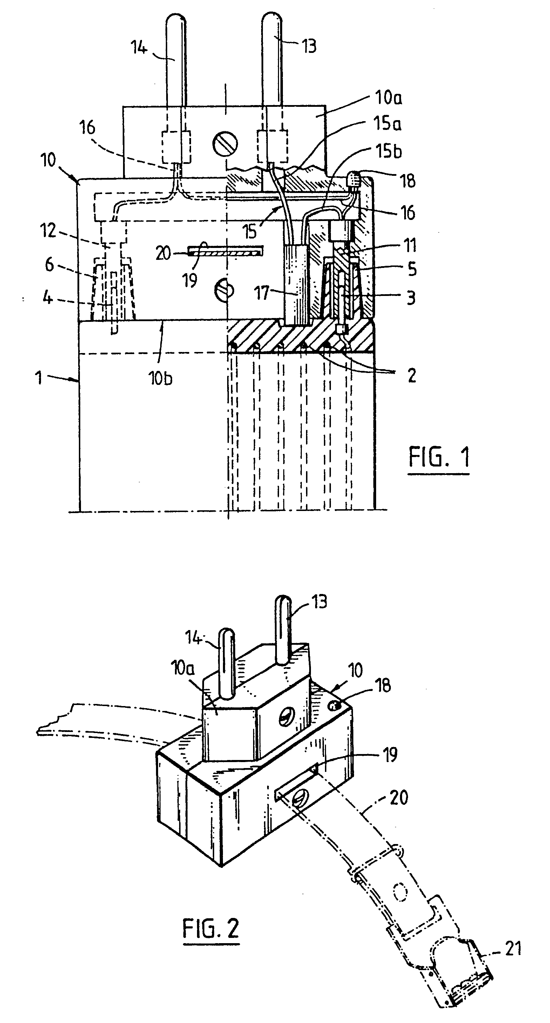

Wie man insbesondere aus der Fig. 1 ersehen kann, weist der Zwischenstecker einen durchgehenden Schlitz 19 auf. Dieser dient zum Durchziehen eines Befestigungsbandes 20, mit welchem der Zwischenstecker auf der zu verschweissenden Muffe festgeschnallt werden kann. Als Befestigungsband kann z.B. ein Gummiband verwendet werden, dessen freie Enden sich durch einen Verschluss 21 miteinander verbinden lassen, so dass ein konstanter Anpressdruck des Zwischensteckers auf der Schweissmuffe gewährleistet ist.

Zum Verschweissen zweier Rohrenden mittels der Schweissmuffe wird diese wie üblich auf die beiden Rohrenden aufgeschoben. Alsdann wird die als Zwischenstecker ausgebildete Steuervorrichtung aufgesteckt. Dann werden die Steckerstifte 13 und 14 in eine Steckdose eingesteckt und diese, falls sie nicht schon unter Spannung steht, an Spannung gelegt. Der durch die Wicklungen 2 fliessende Strom erhitzt die Wicklungen und dadurch die Innenschicht der Muffe und natürlich auch die Aussenschicht der Rohre, auf denen die Muffe sitzt, bis die aufeinander aufliegenden Oberflächen so weich sind, dass sie miteinander verschmelzen. Durch die entstehende Wärme wird auch die Muffenoberfläche warm. Der thermische Ausschalter 17 ist nun so bemessen, dass er bei einer Temperatur auf der Muffenoberfläche bzw. in der Vertiefung der Muffenoberfläche, in die er eingeführt ist, die Stromleitung unterbricht, bei welcher genügend Wärme für die Bildung einer guten Schweissverbindung entstanden ist. Solange eine Spannung an den Steckerstiften 13 und 14 liegt und der Schalter 17 geschlossen ist, glimmt die als Kontroll-Lampe dienende Glimmlampe 18. Wenn der Ausschalter 17 die Heizleitung stromlos macht, erlischt auch die Glimmlampe, so dass die Bedienungsperson den Zwischenstecker wegnehmen und ihn für die nächste Schweissung verwenden kann. Selbstverständlich könnte man auch zusätzlich zur oder anstelle der vorstehend beschriebenen Kontroll-Lampe 18 in die Verbindungsleitung 15 oder 16 eine Kontroll-Lampe einsetzen, die dann brennt, wenn Strom durch die Heizdrahtwicklung 2 fliesst.

**Patentansprüche**

1. Zum Ausschalten des Heizstromes einer strombeheizten Kunststoff-Schweissmuffe (1) dienende Steuervorrichtung, die als ein auf die Schweissmuffe aufsteckbarer Zwischenstecker ausgebildet ist, mit zwei Steckbuchsen (11, 12) zum Aufstecken auf die Stromanschlüsse (3, 4) der Schweissmuffe (1) und je einem mit jeder Steckbuchse durch eine Verbindungsleitung (15, 16) verbundenen Steckerstift (13, 14) zum Einstecken in eine Kupplungssteckdose, wobei in einer der Verbindungsleitungen (15) ein nicht auf den Stromdurchgang sondern auf die von aussen zugeführte Wärme ansprechender thermischer Ausschalter (17) eingesetzt und derart im Zwischensteckergehäuse (10) angeordnet ist, dass er mit der Fläche bündig ist oder über die Fläche vorsteht, die beim Aufstecken des Zwischensteckers auf die Schweissmuffe auf die Schweissmuffenaussenfläche aufzuliegen bestimmt ist, so dass das Ausschalten durch die Temperatur der Schweissmuffenaussenfläche gesteuert wird.

2. Steuervorrichtung nach Anspruch 1, dadurch gekennzeichnet, dass sie mit einer Kontroll-Lampe (18) versehen ist, die anzeigt, wenn eine elektrische Spannung an den Steckbuchsen des Zwischensteckers liegt.

3. Steuervorrichtung nach Anspruch 1, dadurch gekennzeichnet, dass sie mit einer im Stromkreis der Schweissmuffe angeordneten Kontroll-Lampe versehen ist.

4. Steuervorrichtung nach einem der Ansprüche 1 oder 2, dadurch gekennzeichnet, dass der Ausschalter ein Schalter mit verzögerter Wiedereinschaltfunktion ist.

5. Steuervorrichtung nach einem der Ansprüche 1 bis 4, dadurch gekennzeichnet, dass sie mit Hilfsmitteln (20) versehen ist, um die Fläche, die auf der Schweissmuffe aufzuliegen bestimmt ist, mit gleichbleibendem Druck auf die Schweissmuffe (1) festzuhalten.

**Claims**

1. Control device, which serves to switch off the heating current of a current-heated synthetic material welding sleeve (1) and is constructed as intermediate plug pluggable onto the welding sleeve, with two plug sockets (11, 12) for plugging onto the current connections of the welding sleeve (1) and a respective plug pin (13, 14), which is connected through a connecting line (15, 16) with each plug socket, for plugging into a coupling plug socket, wherein a thermal off-switch (17), which responds not to the passage of current, but to heat supplied from outside, is inserted in one of the connecting lines (15) and arranged in the intermediate plug housing (10) in such a manner that it is flush with or projects beyond the surface which is intended to lie on the outside surface of the welding sleeve when the intermediate plug is plugged onto the welding sleeve so that the switching-off is controlled by the temperature of the outside surface of the welding sleeve.

2. Control device according to claim 1, characterised thereby, that it is provided with a pilot lamp (18), which indicates when an electrical voltage is present at the plug sockets of the intermediate plug.

3. Control device according to claim 1, characterised thereby, that it is provided with a pilot lamp arranged in the current circuit of the welding sleeve.

4. Control device according to one of the claims 1 or 2, characterised thereby, that the off-switch is a switch with delayed reclosure function.

5. Control device according to one of the claims 1 to 4, characterised thereby, that it is provided with aids (20) in order to retain the surface, which is intended to lie on the welding sleeve, at constant pressure on the welding sleeve (1).

**Revendications**

1. Dispositif de commande servant à couper le courant de chauffage d'un manchon à souder les matières plastiques à chauffage par courant électrique (1), qui est agencée sous la forme d'une prise d'adaptation qui est agencée de manière à pouvoir s'emboîter sur le manchon à souder (1) et qui comporte deux fiches femelles (11, 12) destinées à s'emboîter sur les bornes électriques (3, 4) du manchon de soudage (1) et, pour chacune de ces fiches femelles, une fiche mâle (13, 14) qui est reliée à cette dernière par un conducteur de jonction (15, 16) et qui est destinée à s'emboîter dans une prise femelle, tandis qu'il est interposé sur l'un (15) des conducteurs de jonction un coupe-circuit thermique (17) qui est déclenché non pas par le passage d'un courant, mais par la chaleur apportée de l'extérieur, et qui est disposé dans le boîtier (10) de la prise d'adaptation de façon qu'il affleure la surface destinée à s'appuyer sur la surface extérieure du manchon à souder lorsqu'on emboîte la prise d'adaptation sur ce manchon, ou bien de façon qu'il fasse saillie sur cette surface du boîtier, si bien que la coupure du courant est commandée par la température de la surface extérieure du manchon à souder.

2. Dispositif de commande selon la revendication 1, caractérisé en ce qu'il est muni d'une ampoule de contrôle (18) qui indique lorsqu'une tension électrique est appliquée sur les fiches femelles de la prise d'adaptation.

3. Dispositif de commande selon la revendication 1, caractérisé en ce qu'il est muni d'une ampoule de contrôle disposée sur le circuit d'alimentation en courant du manchon à souder.

4. Dispositif de commande selon l'une des revendications 1 et 2, caractérisé en ce que le coupe-circuit est un interrupteur à fonction de réenclenchement temporisée.

5. Dispositif de commande selon l'une des revendications 1 à 4, caractérisé en ce qu'il est muni de moyens auxiliaires (20) servant à maintenir sous une pression permanente sur le manchon à souder (1) la surface de ce dispositif qui est destinée à s'appuyer sur ce manchon.

FIG. 1

FIG. 2